# EUROPEAN PATENT APPLICATION

(11) **EP 4 817 399 A1**
(43) Date of publication of application: **07.10.2026**
(21) Application number: 26158921.2
(22) Date of filing: 17.02.2026
(51) Int. Cl.: A01F 15/07, A01F 15/08, A01F 15/18

(54) **ANTI-BUILDUP SYSTEM FOR ROLLERS ON A ROUND BALER**

(30) Priority: 04.04.2025 US 202519170291
(71) Applicant: Deere & Company, Moline, IL 61265 (US)
(72) Inventor: ERDMANN, JEREMY M., 68163 Mannheim (DE); DERSCHEID, DANIEL E, 68163 Mannheim (DE)
(74) Representative: Stein, Stefan

(57) **Abstract**

A baler implement includes a forming belt arranged in an endless loop and define a baling chamber for forming a bale. A roller is disposed in rolling engagement with the forming belt. The roller includes a low friction coating, which operates with crop material accumulated on the roller to exhibit a coating/crop coefficient of static friction, and generate a resultant static frictional force resisting movement of the crop material relative to the coating. The forming belt and crop material accumulated on the roller exhibit a belt/crop coefficient of rolling friction generating a resultant rolling frictional force resisting movement of the crop material relative to the belt. The resultant rolling frictional force is greater than the resultant static frictional force, whereby rolling engagement between the forming belt and the roller moves the crop material accumulated on the roller and thereby dislodges the crop material from the roller.

## Description

### TECHNICAL FIELD

The disclosure generally relates to a baler implement for forming crop material into a bale having a cylindrical shape.

### BACKGROUND

There are a wide variety of different types of machines that generate bales of material. Such balers can bale material like hay, straw, silage, cotton, recycled paper products, etc. One type of machine produces a bale having a cylindrical shape. Such a machine is often referred to as a round baler. One configuration of round baler includes a plurality of forming belts forming a baling chamber and running in an endless loop about a plurality of rollers. Some of the rollers are repositioned during the formation of the bale to increase the size of the baling chamber to accommodate larger diameters. A round baler of this configuration is often referred to as a variable chamber round baler.

During baling operations, it is common for crop material to accumulate on the rollers due to a moisture and sugar content of the crop material being baled. The accumulated crop material on the rollers can have a negative affect on certain operating components and/or systems of the baler implement. For example, in certain situations, accumulated crop material on one or more rollers may cause high forces between the forming belt and a net wrap loading pan, which may damage a net wrap material and may cause pre-mature failure of the forming belts and/or net wrap loading pan. In other situations, accumulated crop material on one or more of the rollers may decrease the speed at which the net wrap is inserted into the baling chamber, which may cause excessive stretch of the net wrap material potentially creating holes in the net wrap material. In order to address the problem of accumulated crop material on the rollers, it is common to include mechanical scraping devices/features on and/or contacting the rollers to scrap off the accumulated crop material. These additional scraping devices/features add complexity and cost to the baler implement.

### SUMMARY

A baler implement is provided. The baler implement includes a housing and a gate rotatably attached to the housing for rotation about a gate rotation axis between a closed position and an open position. A forming belt is arranged to move in an endless loop, and defines a baling chamber for forming crop material into a bale having a cylindrical shape. A roller is rotatably coupled to one of the gate or the housing. The roller is disposed in rolling engagement with the forming belt, whereby during operation, some of the crop material may accumulate on the roller. The roller includes a core having a cylindrical shape and a low friction coating applied to an exterior circumferential surface of the core. The low friction coating and crop material accumulated thereon exhibit therebetween a coating/crop coefficient of static friction under a pressure between the forming belt and the roller, and operable to generate a resultant static frictional force resisting movement of the crop material relative to the coating. The forming belt and crop material accumulated on the low friction coating exhibit therebetween a belt/crop coefficient of rolling friction, under the pressure between the forming belt and the roller, generating a resultant rolling frictional force resisting movement of the crop material relative to the belt. The resultant rolling frictional force between the forming belt and the crop material accumulated on the low friction coating is greater than the resultant static frictional force between the low friction coating and the crop material accumulated thereon. The rolling engagement between the forming belt and the roller is operable to move the crop material accumulated on the low friction coating and thereby dislodge the crop material from the roller.

In one aspect of the disclosure, the forming belt is configured to apply the pressure against the roller of between 10 and 50 psi, in order to generate the coating/crop coefficient of static friction and the belt/crop coefficient of rolling friction.

In one aspect of the disclosure, the low friction coating may include a surface texture measured in Micro Inches (µin) of between 100 and 450 Ra.

In one aspect of the disclosure, the coating/crop coefficient of static friction may include a value that is equal to or greater than 0.9, and the belt/crop coefficient of rolling friction may include a value that is equal to or greater than, for example, 0.9.

In one aspect of the disclosure, the low friction coating may include a base layer and a cover layer disposed over and covering the base layer. The base layer may include one of a tungsten carbide layer or a nickel layer. The cover layer may include, as an example, polytetrafluoroethylene (PTFE).

In one aspect of the disclosure, the low friction coating may include a layer thickness between the range of 0.001 inches and 0.01 inches.

In one aspect of the disclosure, the baler implement may include a belt tensioner having a moveable roller attached thereto for supporting the forming belt. The belt tensioner is moveable relative to the housing to maintain a desired tension in the forming belt while forming the bale within the baling chamber. A belt tensioner actuator may interconnect the belt tensioner and the housing. The belt tensioner actuator may be configured for moving the belt tensioner as a diametric size of the bale increases during bale formation.

A controller may be coupled to the belt tensioner actuator and operable to control the belt tensioner actuator to tension the forming belt. When the gate is disposed in the open position or is moving between the open position and the closed position, the controller may control the belt tensioner actuator to tension the forming belt at a cleaning tension to generate the pressure between the forming belt and the roller for cleaning the accumulated crop material off of the roller.

In one aspect of the disclosure, the forming belt may include a pattern, i.e., textured surface pattern disposed and formed a surface of the forming belt engaging the roller. The textured surface pattern may include, for example, a diamond pattern.

Accordingly, interaction between the forming belt and the low friction coating on the roller is configured to dislodge and remove the accumulated debris and crop material from the roller, thereby eliminating the need for additional mechanical scrapers previously used in other balers.

The above features and advantages and other features and advantages of the present teachings are readily apparent from the following detailed description of the best modes for carrying out the teachings when taken in connection with the accompanying drawings.

### BRIEF DESCRIPTION OF THE DRAWINGS

FIG. 1 is a schematic side view of a baling system showing a gate of a baler implement in a closed position.
FIG. 2 is a schematic side view of the baler implement showing the gate in an open position.
FIG. 3 is a schematic plan view of a forming belt of the baler implement engaging a roller of the baler implement.
FIG. 4 is a schematic cross-sectional view showing the forming belt engaging the roller.
FIG. 5 is a schematic fragmentary enlarged cross-sectional view of the roller showing different layers of a low friction coating on the roller.

### DETAILED DESCRIPTION

Those having ordinary skill in the art will recognize that terms such as "above," "below," "upward," "downward," "top," "bottom," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

The terms "forward", "rearward", "left", and "right", when used in connection with a moveable implement and/or components thereof are usually determined with reference to the direction of travel during operation, but should not be construed as limiting. The terms "longitudinal" and "transverse" are usually determined with reference to the fore-and-aft direction of the implement relative to the direction of travel during operation, and should also not be construed as limiting.

Terms of degree, such as "generally", "substantially" or "approximately" are understood by those of ordinary skill to refer to reasonable ranges outside of a given value or orientation, for example, general tolerances or positional relationships associated with manufacturing, assembly, and use of the described embodiments.

As used herein, "e.g." is utilized to non-exhaustively list examples, and carries the same meaning as alternative illustrative phrases such as "including," "including, but not limited to," and "including without limitation." As used herein, unless otherwise limited or modified, lists with elements that are separated by conjunctive terms (e.g., "and") and that are also preceded by the phrase "one or more of," "at least one of," "at least," or a like phrase, indicate configurations or arrangements that potentially include individual elements of the list, or any combination thereof. For example, "at least one of A, B, and C" and "one or more of A, B, and C" each indicate the possibility of only A, only B, only C, or any combination of two or more of A, B, and C (A and B; A and C; B and C; or A, B, and C). As used herein, the singular forms "a", "an" and "the" are intended to include the plural forms as well, unless the context clearly indicates otherwise. Further, "comprises," "includes," and like phrases are intended to specify the presence of stated features, steps, operations, elements, and/or components, but do not preclude the presence or addition of one or more other features, steps, operations, elements, components, and/or groups thereof.

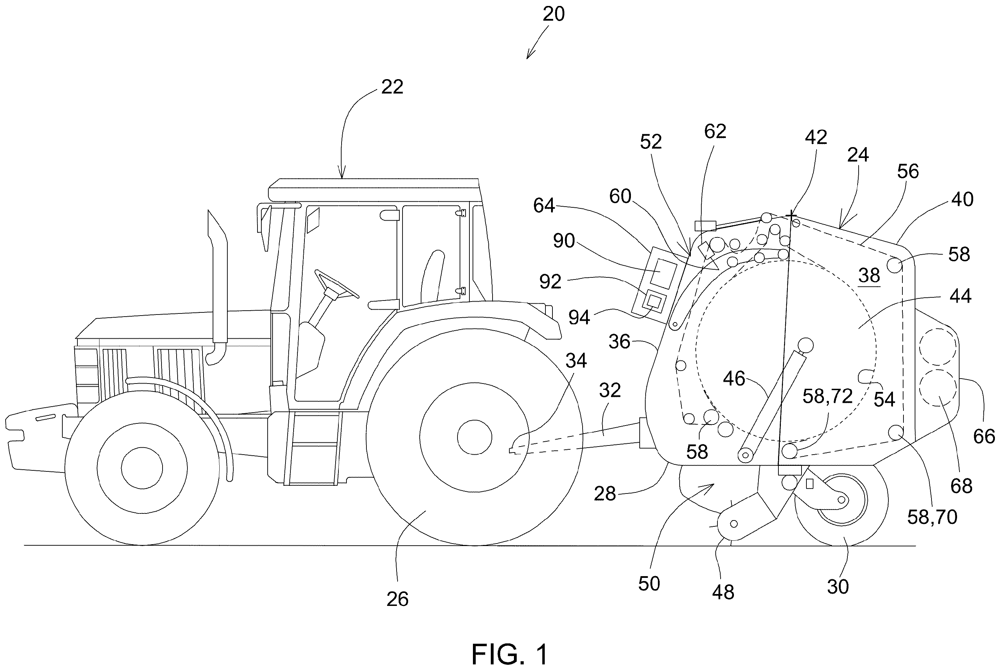

Referring to the Figures, wherein like numerals indicate like parts throughout the several views, a baling system 20 is generally shown at 20 in FIG. 1. In one example implementation shown in the Figures and described herein, the baling system 20 includes a tow vehicle 22 and a round baler implement 24. However, in another implementation, the baling system 20 includes the tow vehicle 22 and the round baler implement 24 combined as a single self-propelled baler implement 24.

Referring to FIG. 1, the tow vehicle 22 is coupled to the round baler implement 24, and is configured for moving the round baler implement 24 across a ground surface. The tow vehicle 22 may include for example, but is not limited to, an agricultural tractor or other similar moveable platform. The tow vehicle 22 includes a drive system operable to generate a motive force for rotating drive element 26s, e.g., drive wheels and/or drive tracks, for propelling the tow vehicle 22 across the ground surface. The drive system may include, but is not limited to, a prime mover coupled to a drive train. The prime mover may include, but is not limited to, an internal combustion engine, an electric motor, or a combination of both. The drive train may include a transmission, drive shafts, axles, differential drives, etc. The drive system is responsive to a drive system control signal for generating torque to move the tow vehicle 22 and the round baling implement across the ground surface. The components and operation of the drive system are understood by those skilled in the art, and are therefore not described in greater detail herein.

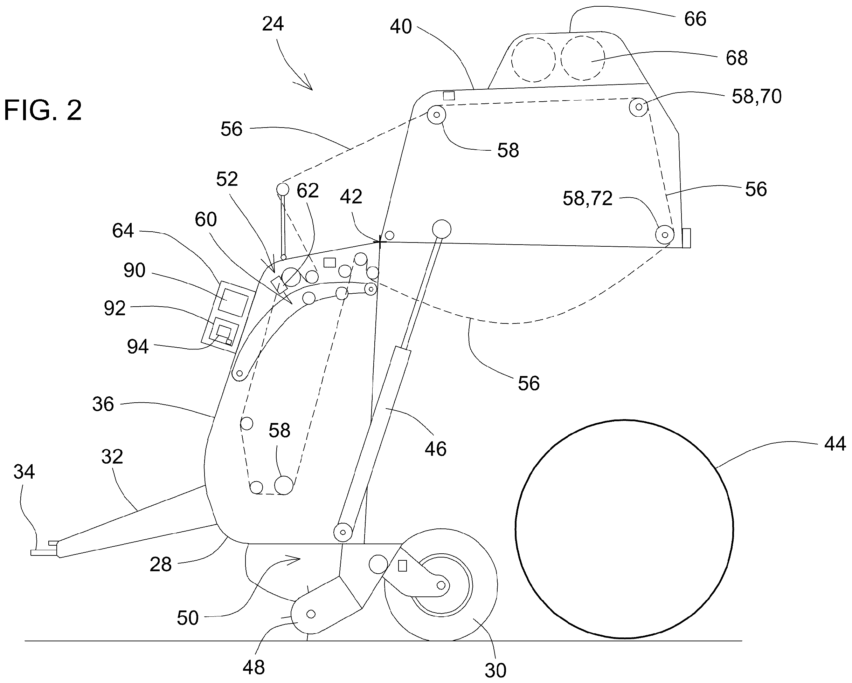

Referring to FIGS. 1 and 2, the round baler implement 24 includes a support structure 28. The support structure 28 may include, but is not limited to, a frame and other structural components connected together to provide structural support to other components and panels of the round baler implement 24. One or more ground engaging elements 30, such as but not limited to one or more wheels and/or tracks, are attached to and rotatably supported by the support structure 28. The ground engaging elements 30 moveably support the support structure 28 relative to the ground surface. A tongue 32 may be coupled to the support structure 28 at a forward end of the of the support structure 28. A hitch arrangement 34 may be included with the tongue 32. The hitch arrangement 34 may be used to attach the round baler implement 24 to the tow vehicle 22.

The round baler implement 24 includes a housing 36. The housing 36 is attached to and supported by the support structure 28. The housing 36 may include one or more walls or panels that at least partially enclose and/or define an interior region 38. The round baler implement 24 further includes a gate 40. The gate 40 may include one or more walls or panels that at least partially enclose and/or define the interior region 38. As such, the housing 36 and the gate 40 cooperate to define the interior region 38 therebetween.

The gate 40 is attached to and rotatably supported by the housing 36. The gate 40 is positioned adjacent a rearward end of the support structure 28 relative to a direction of travel of the round baler implement 24 while gathering crop material, and is pivotably moveable about a gate rotation axis 42. The gate rotation axis 42 is generally horizontal and perpendicular to a central longitudinal axis of the round baler implement 24. The central longitudinal axis of the round baler implement 24 extends between the forward end and the rearward end of the round baler implement 24. The gate 40 is moveable between a closed position (shown in FIG. 1 for forming a bale 44 within a bale formation system 52 disposed within the interior region 38, and an open position (shown in FIG. 2) for discharging the bale 44 from the interior region 38 onto the ground surface.

A gate actuator 46 interconnects the gate 40 and one of the housing 36 and/or the support structure 28. The gate actuator 46 is selectively controllable via a gate 40 actuator control signal to move the gate 40 between the open position and the closed position. The gate actuator 46 may include, but is not limited to, a hydraulic cylinder or other similar device capable of causing the gate 40 to rotate about the gate rotation axis 42 relative to the housing 36.

The round baler implement 24 includes a pick-up 48 disposed proximate the forward end of the support structure 28. The pick-up 48 gathers crop material from the ground surface and directs the gathered crop material toward and into an inlet 50 of the interior region 38. The pickup may include, but is not limited to tines, forks, augers, conveyors, baffles, etc., for gathering and moving the crop material. The round baler implement 24 may be equipped with a pre-cutter (not shown), disposed between the pickup and the inlet 50. As such, the pre-cutter is disposed downstream of the pickup and upstream of the inlet 50 relative to movement of the crop material. As is understood by those skilled in the art, the pre-cutter cuts or chops the crop material into smaller pieces.

The bale formation system 52 is disposed within the interior region 38, between the housing 36 and the gate 40, and defines a baling chamber 54, within which the bale 44 is formed. The bale formation system 52 is operable to form the bale 44 to have a cylindrical shape. The bale formation system 52 may be configured as a fixed chamber system or a variable chamber system. As understood by those skilled in the art, although not shown in the Figures, a fixed chamber system includes a plurality of rollers 58 attached to and supported by the support structure 28, the housing 36, and/or the gate 40. The plurality of rollers 58 extend transverse to the direction of travel during operation, and their respective centerlines are arranged in a circular orientation to define a cylindrical baling chamber 54 therebetween. The plurality of rollers 58 are fixed in position relative to the support structure 28 during formation of the bale 44 within the baling chamber 54, thereby defining the baling chamber 54 having a fixed size.

Referring to FIGS. 1 and 2, and as is understood by those skilled in the art, the example implementation of the round baler implement 24 is shown configured having a variable chamber system. The variable chamber system includes at least one, and may include a plurality of longitudinally extending side-by-side forming belts 56 that are supported by a plurality of rollers 58.

The forming belts 56 define the baling chamber 54 and move in an endless loop to form crop material into the bale 44 having the cylindrical shape. The bale 44 is formed by the forming belts 56 and one or more side walls of the housing 36 and gate 40. As is understood by those skilled in the art, a group of the plurality of rollers 58 is moveable relative to the support structure 28, the housing 36, and/or the gate 40 during formation of the bale 44 to control the position of the forming belts 56 defining the baling chamber 54 to vary the diametric size of the baling chamber 54 as the diametric size of the bale 44 increases. In this manner, the forming belts 56 may maintain a constant pressure against the bale 44 during formation thereof as the diametric size of the bale 44 increases.

In the example implementation shown in the figures and described herein, in which the bale formation system 52 includes the variable chamber baler, the crop material is directed through the inlet 50 and into the baling chamber 54, whereby the forming belts 56 roll the crop material in a spiral fashion into the bale 44 having the cylindrical shape. The forming belts 56 apply a constant pressure to the crop material as the crop material is formed into the bale 44. A belt tensioner 60 continuously moves one or more of the rollers 58, and thereby the forming belts 56, radially outward relative to the centerline of the cylindrical bale 44 as a diameter of the bale 44 increases. The belt tensioner 60 maintains the appropriate tension in the forming belts 56 to obtain the desired density of the crop material.

The baler implement 24 may include a belt tensioner actuator 62 interconnecting the belt tensioner 60 and the housing 36. The belt tensioner actuator 62 is configured for moving the belt tensioner 60 to maintain the appropriate tension in the forming belts 56. The belt tensioner actuator 62 may include, but is not limited to, a hydraulic cylinder, an electric linear actuator, an electric rotary actuator, a pneumatic cylinder, a spring, etc. Movement of the belt tensioner actuator 62 may be controlled by a baler controller 64, described in greater detail below.

As shown in FIGS. 1 and 2, the round baler implement 24 may include a wrap system 66. The wrap system 66 is operable to wrap the bale 44 with a wrap material 58 inside the baling chamber 54. Once the bale 44 is formed to a desired size, the wrap system 66 feeds the wrap material 58 into the baling chamber 54 to wrap the bale 44 and thereby secure the crop material in a tight package and maintain the desired shape of the bale 44. The wrap material 58 may include, but is not limited to, a twine, a net mesh, or a solid plastic wrap. Movement of the gate 40 into the open position simultaneously moves the belts clear of the formed bale 44 and allows the formed and wrapped bale 44 to be discharged through the rearward end of the baling chamber 54.

The baler implement 24 includes a roller 70, 72 rotatably coupled to one of the gate 40 or the housing 36. In the example implementation, the roller 70, 72 is disposed in rolling engagement with the forming belts 56, whereby during operation, the roller 70, 72 rotatably supports the forming belts 56 as the forming belts 56 circulate in an endless loop. The roller 70, 72 described below may include any of the plurality of rollers 58 of the bale formation system 52. Particularly however, the roller 70, 72 described below may be positioned as a lower rear gate roller 70 or a lower front gate roller 72. During normal baling operations, it is common that some of the crop material may accumulate on the roller 70, 72. Because the lower rear gate roller 70 and the lower front gate roller 72 are involved with and incorporated into the wrap system 66 for wrapping the bale 44 with the wrap material 58, i.e., either directly or indirectly contacting the wrap material 58 as the wrap material 58 is fed into the baling chamber 54, accumulated crop material on the lower rear gate roller 70 and the lower front gate roller 72 may have a detrimental effect on the wrap process, particularly feeding the wrap material 58 into the baling chamber 54 and/or tensioning the wrap material 58 to a desired tension. Accordingly, it is desirable to keep the lower rear gate roller 70 and the lower front gate roller 72 clean and free of accumulated crop material.

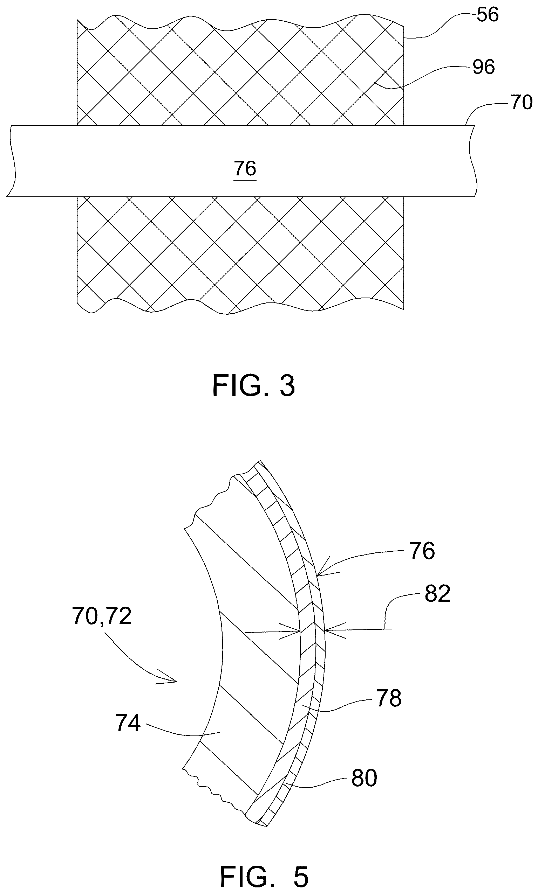

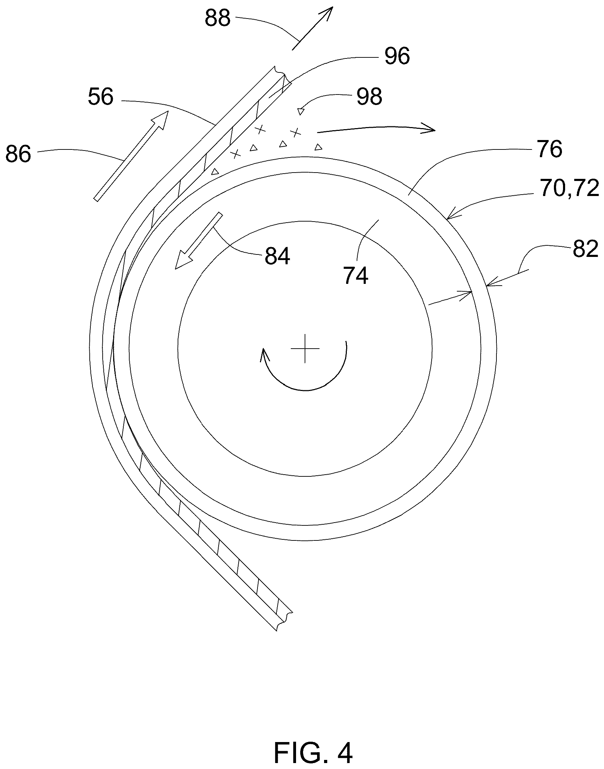

Referring to FIGS. 3 and 4, the forming belts 56 may include a textured surface pattern 96 for interacting with the crop material and the roller 70, 72. In one example the textured surface pattern 96 include a diamond pattern formed on a surface of the forming belts 56 which engages the roller 70, 72. The forming belts 56 are configured to apply a pressure against each of the plurality of roller 70, 72, e.g., the lower rear gate roller 70 and the lower front gate roller 72, of between 10 and 50 psi. The pressure may vary depending upon the desired density of the bale 44 and/or the phase of the baling process. For example, the pressure may be less during initial bale 44 formation within the baling chamber 54, and may decrease significantly when the gate 40 is opened to eject the bale 44 from the baling chamber 54.

Referring to FIG. 4, the roller 70, 72 includes a core 74 having a cylindrical shape. The core 74 may include and be manufactured from steel or steel alloy. A low friction coating 76 is applied to an exterior circumferential surface of the core 74. Referring to FIG. 5, The low friction coating 76 includes a base layer 78 and a cover layer 80 disposed over and covering the base layer 78. The base layer 78 may include one of, but is not limited to, a tungsten carbide layer or a nickel layer. The cover layer 80 may include for example, but is not limited to, polytetrafluoroethylene. The low friction coating 76, including both the base layer 78 and the cover layer 80, may include a layer thickness 82 between the range of 0.001 inches and 0.01 inches.

As best shown in FIG. 4, the low friction coating 76 provides a surface against which the forming belts 56 engage. Due to the low friction characteristics of the low friction coating 76, the interaction between the forming belts 56 and the low friction coating 76 operates to clean, brush, or scrape the accumulated crop material or debris off of the low friction coating 76, thereby removing the crop material from the roller 70, 72 without the use of any mechanical scrapers or the like. The low friction coating 76 includes a surface texture measured in Micro Inches (µin) of between 100 and 450 Ra. The low friction coating 76 exhibits a coefficient of static friction against steel between the range of 0.10 and 0.30.

The low friction coating 76 and crop material accumulated thereon exhibit therebetween a coating/crop coefficient of static friction under an operating pressure between the forming belt 56 and the roller 70, 72. As understood by those skilled in the art, static friction is a force that keeps an object at rest. As used herein, static friction between the low friction coating 76 and the crop material accumulated thereon is the force that keeps the crop material at rest on the roller 70, 72, i.e., the friction experienced when trying to move the crop material relative to the roller 70, 72 without actually triggering any relative motion between the crop material and the roller 70, 72. The coating/crop coefficient of static friction is operable to generate a resultant static frictional force 84 resisting movement of the crop material relative to the low friction coating 76. The coating/crop coefficient of static friction may be equal to or greater than, for example, 0.9.

The forming belt 56 and crop material accumulated on the low friction coating 76 exhibit therebetween a belt/crop coefficient of rolling friction under the operating pressure between the forming belt 56 and the roller 70, 72. As understood by those skilled in the art, rolling friction occurs when an object rolls on a surface, and occurs due to the deformation of the surfaces. The coefficient of rolling friction is dependent upon the radius of the rolling object, the depth to which the object can sink and the toughness of the surface. As described herein, rolling friction occurs between the roller 70, 72 and the forming belt 56 as the roller 70, 72 rolls against the forming belt 56. Referring to FIG. 4, the direction of movement of the forming belt 56 is shown by arrow 88. When crop material is accumulated on the roller 70, 72, then the rolling friction occurs between the crop material disposed on the exterior of the roller 70, 72 and the forming belt 56. The belt/crop coefficient of rolling friction is operable to generate a resultant rolling frictional force 86 resisting movement of the crop material relative to the belt, thereby attracting or adhering the crop material to the forming belt 56. The belt/crop coefficient of rolling friction may be equal to or greater than, for example, 0.9.

In prior art baler implements 24 using non-coated steel rollers, the static friction of the crop material against the steel is higher than rolling friction between the crop material and the forming belts. However, due to the low friction coating 76 on the roller 70, 72 provided and described herein, the coating/crop coefficient of static friction is less than the belt/crop coefficient of rolling friction, thereby allowing the interaction from the forming belts 56 to dislodge and move the crop material, i.e., the debris 98, relative to the roller 70, 72. In other words, the resultant rolling frictional force 86 between the forming belt 56 and the crop material accumulated on the low friction coating 76 is greater than the resultant static frictional force 84 between the low friction coating 76 and the crop material accumulated thereon. This allows the rolling engagement between the forming belt 56 and the roller 70, 72 to move the debris 98 accumulated on the low friction coating 76 and thereby dislodge the crop material from the roller.

As described above, the removal of the crop material from the low friction coating 76 of the roller 70, 72 may be caused by the rolling friction between the roller 70, 72 and the forming belts 56. Also, as noted above, the pressure applied by the forming belts 56 against the roller 70, 72 may significantly decrease when the gate 40 is raised to eject the bale 44 from the baling chamber 54. As such, with the gate 40 raised to eject the bale 44, the forming belts 56 may not apply enough pressure against the roller 70, 72 to dislodge and remove the crop material accumulated on the low friction coating 76 of the roller. Accordingly, the baler controller 64 may control the belt tensioner actuator 62 to increase the tension in the forming belts 56 to increase the pressure between the forming belts 56 and the roller 70, 72 when the gate 40 is in the open position, or moving between the open position and the closed position.

The baler controller 64 is disposed in communication with the belt tensioner actuator 62 for communicating a control signal to the belt tensioner actuator 62. While the baler controller 64 is generally described herein as a singular device, it should be appreciated that the baler controller 64 may include multiple devices linked together to share and/or communicate information therebetween. Furthermore, it should be appreciated that the baler controller 64 may be located on the baler implement 24 or located remotely from the baler implement 24.

The baler controller 64 may alternatively be referred to as a computing device, a computer, a controller, a control unit, a control module, a module, etc. The baler controller 64 includes a processor 90, a memory 92, and all software, hardware, algorithms, connections, sensors, etc., necessary to manage and control the operation of the belt tensioner actuator 62. As such, a method may be embodied as a program or algorithm operable on the baler controller 64. It should be appreciated that the baler controller 64 may include any device capable of analyzing data from various sensors, comparing data, making decisions, and executing the required tasks.

As used herein, "controller" is intended to be used consistent with how the term is used by a person of skill in the art, and refers to a computing component with processing, memory, and communication capabilities, which is utilized to execute instructions (i.e., stored on the memory 92 or received via the communication capabilities) to control or communicate with one or more other components. In certain embodiments, the baler controller 64 may be configured to receive input signals in various formats (e.g., hydraulic signals, voltage signals, current signals, CAN messages, optical signals, radio signals), and to output command or communication signals in various formats (e.g., hydraulic signals, voltage signals, current signals, CAN messages, optical signals, radio signals).

The baler controller 64 may be in communication with other components on the baler implement 24, such as hydraulic components, electrical components, and operator inputs within an operator station of an associated work vehicle. The baler controller 64 may be electrically connected to these other components wirelessly or via a wiring harness such that messages, commands, and electrical power may be transmitted between the baler controller 64 and the other components. Although the baler controller 64 is referenced in the singular, in alternative embodiments the configuration and functionality described herein can be split across multiple devices using techniques known to a person of ordinary skill in the art.

The baler controller 64 may be embodied as one or multiple digital computers or host machines each having one or more processors, read only memory (ROM), random access memory (RAM), electrically-programmable read only memory (EPROM), optical drives, magnetic drives, etc., a high-speed clock, analog-to-digital (A/D) circuitry, digital-to-analog (D/A) circuitry, and any required input/output (I/O) circuitry, I/O devices, and communication interfaces, as well as signal conditioning and buffer electronics.

The computer-readable memory 92 may include any non-transitory/tangible medium which participates in providing data or computer-readable instructions. The memory 92 may be non-volatile or volatile. Non-volatile media may include, for example, optical or magnetic disks and other persistent memory. Example volatile media may include dynamic random access memory (DRAM), which may constitute a main memory. Other examples of embodiments for the memory 92 include a floppy, flexible disk, or hard disk, magnetic tape or other magnetic medium, a CD-ROM, DVD, and/or any other optical medium, as well as other possible memory devices such as flash memory.

The baler controller 64 includes the tangible, non-transitory memory 92 on which are recorded computer-executable instructions, including a gate control algorithm 94. The processor 90 of the baler controller 64 is configured for executing the gate control algorithm 94. The gate control algorithm 94 implements a method of controlling the belt tensioner actuator 62 while closing the gate 40, described in detail below. As described above, the gate 40 is moved to the open position to eject the bale 44 from the baling chamber 54. Once the bale 44 is ejected from the baling chamber 54 and clear of the gate 40, the gate 40 is moved back into the closed position to begin baling a subsequent bale 44. While the gate 40 is moving from the open position into the closed position, the baler controller 64 may communicate the control signal to the belt tensioner actuator 62 to control the belt tensioner actuator 62 to tension the forming belts 56 to a cleaning tension sufficient to generate the pressure between the forming belt 56 and the roller 70, 72. By so doing, the pressure necessary to generate the necessary rolling friction between the forming belt 56 and the roller 70, 72 to remove the crop material accumulated on the roller 70, 72 may be generated to clean the roller 70, 72 while the gate 40 is moving back into the closed position. By so doing, the roller 70, 72 may be cleaned of the accumulated crop material while the baling chamber 54 is empty, i.e., with no bale 44 in the baling chamber 54.

The detailed description and the drawings or figures are supportive and descriptive of the disclosure, but the scope of the disclosure is defined solely by the claims. While some of the best modes and other embodiments for carrying out the claimed teachings have been described in detail, various alternative designs and embodiments exist for practicing the disclosure defined in the appended claims.

## Claims

1. A baler implement (24) comprising:
a housing (36);
a gate (40) rotatably attached to the housing (36) for rotation about a gate rotation axis (42) between a closed position and an open position;
a forming belt (56) arranged to move in an endless loop and define a baling chamber (54) for forming crop material into a bale (44) having a cylindrical shape;
a roller (70, 72) rotatably coupled to one of the gate (40) or the housing (36), and disposed in rolling engagement with the forming belt (56), whereby during operation some of the crop material may accumulate on the roller (70, 72);
wherein the roller (70, 72) includes a core (74) having a cylindrical shape and a low friction coating (76) applied to an exterior circumferential surface of the core (74);
wherein the low friction coating (76) and crop material accumulated thereon exhibit therebetween a coating/crop coefficient of static friction under a pressure between the forming belt (56) and the roller (70, 72), and operable to generate a resultant static frictional force (84) resisting movement of the crop material relative to the coating;
wherein the forming belt (56) and crop material accumulated on the low friction coating (76) exhibit therebetween a belt/crop coefficient of rolling friction under the pressure between the forming belt (56) and the roller (70, 72) generating a resultant rolling frictional force (86) resisting movement of the crop material relative to the forming belt (56);
wherein the resultant rolling frictional force (86) between the forming belt (56) and the crop material accumulated on the low friction coating (76) is greater than the resultant static frictional force (84) between the low friction coating (76) and the crop material accumulated thereon, whereby the rolling engagement between the forming belt (56) and the roller (70, 72) is operable to move the crop material accumulated on the low friction coating (76) and thereby dislodge the crop material from the roller (70, 72).

2. The baler implement (24) set forth in claim 1, wherein the forming belt (56) is configured to apply the pressure against the roller (70, 72) of between 10 and 50 psi.

3. The baler implement (24) set forth in claim 1 or 2, wherein the low friction coating (76) includes a surface texture measured in micro inches of between 100 and 450 Ra.

4. The baler implement (24) according to at least one of the preceding claims, wherein the coating/crop coefficient of static friction is equal to or greater than 0.9.

5. The baler implement (24) according to at least one of the preceding claims, wherein the belt/crop coefficient of rolling friction is equal to or greater than 0.9.

6. The baler implement (24) according to at least one of the preceding claims, wherein the low friction coating (76) includes a base layer (78) and a cover layer (80) disposed over and covering the base layer (78), wherein the base layer (78) is one of a tungsten carbide layer or a nickel layer.

7. The baler implement (24) set forth in claim 6, wherein the cover layer (80) includes polytetrafluoroethylene.

8. The baler implement (24) according to at least one of the preceding claims, wherein the low friction coating (76) includes a layer thickness (82) between the range of 0.001 inches and 0.01 inches.

9. The baler implement (24) according to at least one of the preceding claims, further comprising a belt tensioner (60) having a moveable roller (58) attached thereto for supporting the forming belt (56), wherein the belt tensioner (60) is moveable relative to the housing (36) to maintain a desired tension in the forming belt (56) while forming the bale (44) within the baling chamber (54).

10. The baler implement (24) set forth in claim 9, further comprising a belt tensioner actuator (62) interconnecting the belt tensioner (60) and the housing (36), wherein the belt tensioner actuator (62) is configured for moving the belt tensioner (60).

11. The baler implement (24) according to at least one of the preceding claims, further comprising a controller (64) coupled to the belt tensioner actuator (62) and operable to control the belt tensioner actuator (62) to tension the forming belt (56) to a cleaning tension to generate the pressure between the forming belt (56) and the roller (70, 72) when the gate (40) is disposed in the open position or moving between the closed position and the open position.

12. The baler implement (24) according to at least one of the preceding claims, wherein the forming belt (56) includes a textured surface pattern (96) formed on a surface of the forming belt (56) engaging the roller (70, 72).

13. The baler implement (24) according to at least one of the preceding claims, wherein the low friction coating (76) exhibits a coefficient of static friction against steel between the range of 0.10 and 0.30.
